# EUROPEAN PATENT SPECIFICATION

(11) **EP 0 443 215 B1**
(45) Date of publication and mention of the grant of the patent: **13.07.1994**
(21) Application number: 90203219.2
(22) Date of filing: 06.12.1990
(51) Int. Cl.: F16H 25/12, A22C 21/06

(54) **Apparatus for imparting a simultaneous rotational movement to an object moving along a rectilinear trajectory**
Apparat zum Übertragen einer simultanen Drehbewegung auf ein sich linear bewegendes Objekt
Appareil pour impliquer un mouvement rotatif simultané à un objet étant en mouvement rectiligne

(30) Priority: 23.02.1990 NL 9000436
(43) Date of publication of application: 28.08.1991
(73) Proprietor: MACHINEFABRIEK MEYN B.V., NL-1511 AE Oostzaan (NL)
(72) Inventor: Meyn, Pieter, NL-1511 AE Oostzaan (NL)
(74) Representative: Voncken, Bartholomeus Maria Christiaan

(56) References cited:
- EP-A- 0 162 154
- EP-A- 0 235 821
- FR-A- 2 603 940
- NL-A- 7 501 521
- NL-A- 7 607 089
- NL-A- 7 700 233
- NL-A- 7 801 712
- US-A- 3 133 453
- US-A- 3 736 801
- US-A- 3 792 616

## Description

The invention relates to an apparatus for processing slaughtered poultry, such as for removing the craw, suitable for imparting a simultaneous rotational movement to a processing device moving along a rectilinear trajectory, with a straight guide comprising an at least partially spiral guide trajectory and with a slide that is positioned around the guide and that is movable to and fro in the longitudinal direction thereof by a driving mechanism, said slide being provided with a follower means engaging the guide trajectory for rotating the slide relative to the guide in the region of the spiral guide trajectory.

An apparatus of the type referred to above is often used in machines that perform a special operation. An example of such a machine is an apparatus for removing the craw of slaughtered poultry. In such an apparatus a mandril with projections is moved through the abdominal cavity and the neck of the slaughtered poultry to remove the craw of the poultry. During at least part of its motion the mandril rotates about its own axis to optimize its function. Therefore the mandril simultaneously carries out a rectilinear movement in the direction of its central axis as well as a rotational movement about this central axis.

For achieving this rotational movement of the mandril, that is connected to the slide, the guide is provided with an at least partially spiral groove in which engages a pin attached to the slide. If the slide is moved along the guide the pin will firstly run through a straight groove section such that the slide will not rotate. After reaching the spiral groove section however, the slide will, apart from its rectilinear translation, also carry out a rotational movement.

The document NL-A-76.07089 (which is considered to be the nearest state of the art) illustrates an apparatus for removing the cloaca of poultry, in which a longitudinal movement of a first slide relative to a guide leads to a rotational movement of said guide. A second slide can move the guide longitudinally too. Again, a pin carried by the (first) slide cooperates with a spiral groove on the guide. A corresponding apparatus is shown by NL-A-75.01521.

A disadvantage of these known apparatuses is that the cooperation between the pin and the groove results in a high friction and therefore leads to a fast wear of the respective parts. Moreover the high friction requires a high driving power of the apparatus and thus heavy and expensive motors.

It is an object of the invention to provide an apparatus of the type referred to above in which the abovementioned disadvantages are removed in a simple but nevertheless effective way.

Thus the apparatus according to the invention is characterized in that the guide comprises a stationary and substantially cylindrical rod, whereas the guide trajectory is defined by a flattening of the rod, said flattening at a first section of the guide not having a spiral shape, so that along said first section the slide (3) will only carry out a translational movement, and said flattening at a second section of the guide having a spiral shape, so that along said second section the slide will simultaneously carry out a rotational movement and wherein the follower means exists of a guide wheel journalled in the slide and engaging the flattening of the cylindrical rod, whereas bearings (12, 13) are provided for enabling the rotation of the slide relative to the driving mechanism. The guide wheel journalled in the slide carries out a rolling motion over the flattening of the cylindrical rod, as a result of which the resulting friction is low. The cooperation between the flattening and the guide wheel however accomplishes that the slide obtains the desired rotational movement.

Per se, the provision of a flattening cooperating with a guide wheel is known from the nut and lead screw mechanism illustrated in US-A-3.133.453. This mechanism, however, is not adapted to perform the special functions according to the present invention.

According to a preferred embodiment of the apparatus according to the invention the cylindrical rod is provided with two flattenings whereas two corresponding guide wheels are journalled in the slide. Such an embodiment can still further be optimized if the two flattenings are positioned diametrically opposite each other. Like this the forces acting on the slide are symmetrical so that the resulting friction, and therefore the wear, are still further decreased.

In a simple embodiment of the apparatus according to the invention the guide wheel axis intersects the longitudinal axis of the cylindrical rod at a right angle. Such an embodiment is characterized by a simple constructive design as a result of which the costs of the apparatus will be limited. It is possible however that the guide wheel axis intersects the longitudinal axis of the cylindrical rod at an acute angle. Among others this angle can be dependent on the choosen pitch of the spiral guide trajectory. By an adequate choice of the said angle one may accomplish that the cooperation between the flattening of the cylindrical rod and the guide wheel engaging it will occur as advantageous as possible, as well in the region of the straight guide trajectory section as at the region of the spiral guide trajectory section.

Hereinafter the invention will be elucidated further by means of the drawing in which an embodiment of the apparatus according to the invention is illustrated.
Fig. 1 shows an embodiment of the apparatus according to the invention, and
Fig. 2 shows a section according to II-II in fig. 1.

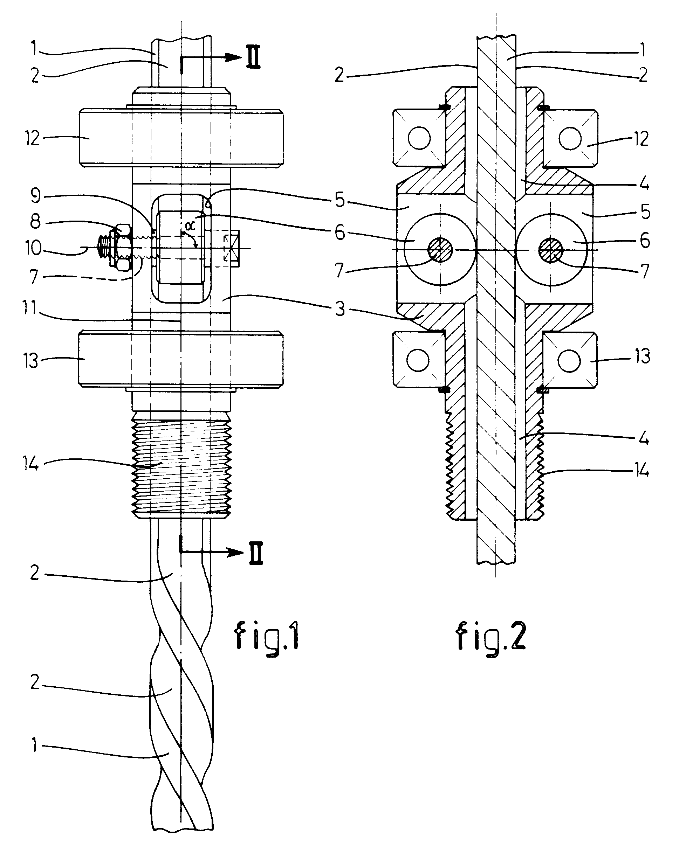

The apparatus represented in fig. 1 for imparting a simultaneous rotational movement to an object moving along a rectilinear trajectory firstly is provided with a straight guide 1. This straight guide 1 is shaped as a cylindrical rod having two diametrically opposed flattenings 2. Over at least part of the length of the straight guide 1 the flattenings 2 extend spirally. This part of the straight guide 1 is shown in the lowermost section of fig. 1. In the uppermost section of fig. 1 the straight guide 1 doesn't have such a spiral shape. Further can be seen that the spiral section of the straight guide 1 gradually transforms into the non-spiral shaped section.

A slide 3 is positioned around the guide 1. This slide 3 is provided with an axial bore 4 having a diameter that substantially corresponds with the maximum diameter of the straight guide 1. Thus the slide 3 can move to and fro along the straight guide 1 in its longitudinal direction. During such a to and fro movement of the slide 3 the central axis of the slide 3 will constantly coincide with the central axis of the straight guide 1.

In the slide 3 two recesses 5 joining the bore 4 are formed. In each recess 5 a guide wheel 6 is received that is journalled in the slide 3 by means of a pin 7. This pin 7 is fastened by means of a nut 8. Further for correct positioning the guide wheel 6 a washer 9 can be applied between this guide wheel 6 and the slide 3.

As appears clearly from fig. 2 both guide wheels 6 engage the surfaces of the flattenings 2 of the straight guide 1. The guide wheels 6 do not at all obstruct the to and fro movement of the slide 3 into the longitudinal direction of the straight guide 1, but obviate that the slide 3 will in an uncontrolled way rotate relative to the straight guide 1.

If the slide runs through the upper section of the straight guide 1 as shown in fig. 1, where the flattenings 2 do not yet have a spiral shape, the slide 3 will only carry out a translational movement relative to the straight guide. When the spiral section of the straight guide 1 is reached the guide wheels 6 will follow the flattenings 2 such that the slide 3 will, during its continuing translational movement, rotate relative to the straight guide 1 in correspondance with this spiral shape. Thus in the region of the spiral guide section the slide obtains simultaneously a translational movement and a rotational movement.

In the shown embodiment of the apparatus the angle at which the axis 10 of the guide wheels 6 intersects the longitudinal axis 11 of the straight guide 1 is 90°. It is possible however that this angle α is smaller than 90°. Such an angle α differing from 90° can be advantageous to take account for the pitch angle of the spiral flattenings in the spiral region of the straight guide 1.

In operation the slide 3 is moved to and fro in the longitudinal direction of the straight guide 1 by a driving mechanism not shown. The connection between the slide 3 and such a driving mechanism should take account for the rotation of the slide 3 occuring. In the illustrated embodiment of the apparatus this is achieved by the provision of ball-bearings 12, 13 that enable the rotation of the slide 3 relative to a driving mechanism connected therewith. In a way known per se the driving mechanism could comprise a curved track and a follower roll cooperating therewith. However still other solutions are possible.

At its lower side the slide 3 is provided with a threaded end 14. A not illustrated processing device, that has to be driven by the shown apparatus, can be mounted thereon. Such a processing device can for example exist of a mandril having projections that is used for removing the craw of slaughtered poultry. By means of the illustrated apparatus the mandril firstly is positioned into a body cavity of the poultry without any rotational movement, and just after reaching a certain depth it will start to rotate also. In this case the mandril is at least partially hollow, such that it can receive the section of the straight guide 1 extending beneath the slide 3.

As mentioned before it is possible that the guide wheels 6 are positioned at a different angle relative to the straight guide 1. Further the possibility remains to provide only one guide wheel in stead of two guide wheels 6. In such a case the straight guide 1 also only comprises one flattening 2. However, in such a case asymmetrical loads are applied to the slide 3 which generally will lead to more friction and a faster wear.

## Claims

1. Apparatus for processing slaughtered poultry, such as for removing the craw, suitable for imparting a simultaneous rotational movement to a processing device moving along a rectilinear trajectory, with a straight guide (1) comprising an at least partially spiral guide trajectory and with a slide (3) that is positioned around the guide and that is movable to and fro in the longitudinal direction thereof by a driving mechanism, said slide being provided with a follower means (6) engaging the guide trajectory for rotating the slide relative to the guide in the region of the spiral guide trajectory **characterized** in that the guide (1) comprises a stationary and substantially cylindrical rod (1), whereas the guide trajectory is defined by a flattening (2) of the rod, said flattening at a first section of the guide not having a spiral shape, so that along said first section the slide (3) will only carry out a translational movement, and said flattening at a second section of the guide having a spiral shape, so that along said second section the slide will simultaneously carry out a rotational movement and wherein the follower means exists of a guide wheel (6) journalled in the slide and engaging the flattening (2) of the cylindrical rod, whereas bearings (12, 13) are provided for enabling the rotation of the slide relative to the driving mechanism.

2. Apparatus according to claim 1, **characterized** in that the cylindrical rod (1) is provided with two flattenings (2) whereas two corresponding guide wheels (6) are journalled in the slide (3).

3. Apparatus according to claim 2, **characterized** in that the two flattenings (2) are positioned diametrically opposite each other.

4. Apparatus according to one of the claims 1-3, **characterized** in that the guide wheel axis (10) intersects the longitudinal axis (11) of the cylindrical rod (1) at a right angle.

5. Apparatus according to one of the claims 1-3, **characterized** in that the guide wheel axis (10) intersects the longitudinal axis (11) of the cylindrical rod (1) at an acute angle.

## Patentansprüche

1. Vorrichtung zum Verarbeiten von geschlachtetem Geflügel, z. B. zum Entfernen des Kropfes, mittels welcher einem sich längs einer geradlinigen Bahn bewegenden Verarbeitungsaggregat eine gleichzeitige Drehbewegung erteilbar ist, mit einer geraden Führung (1), die zumindest teilweise eine schraubenlinienförmige Führungsbahn aufweist, und mit einem Schlitten (3) der um die Führung herum angeordnet ist und in deren Längsrichtung mit Hilfe eines Antriebsmechanismus hin und her bewegbar ist, wobei der Schlitten mit einer Mitläufereinrichtung (6) versehen ist, die mit der Führungsbahn im Eingriff steht, um den Schlitten im Bereich der schraubenlinienförmigen Führungsbahn relativ zur Führung zu drehen, **dadurch gekennzeichnet,** daß die Führung (1) aus einem stationären und im wesentlichen zylindrischen Stab (1) besteht und die Führungsbahn durch eine Abflachung (2) des Stabes gebildet ist, welche in einem ersten Abschnitt der Führung keine schraubenlinienförmige Gestalt aufweist, so daß der Schlitten (3) längs dieses ersten Abschnittes nur eine Translationsbewegung ausführt, und welche Abflachung in einem zweiten Abschnitt der Führung eine schraubenlinienförmige Gestalt aufweist, so daß der Schlitten längs dieses zweiten Abschnittes gleichzeitig eine Drehbewegung ausführen wird, und daß die Mitläufereinrichtung (6) aus einer Führungsrolle (6) besteht, die im Schlitten drehbar gelagert ist und mit der Abflachung (2) des zylindrischen Stabes im Eingriff steht, wobei Lager (12, 13) vorgesehen sind, um die Rotation des Schlittens relativ zum Antriebsmechanismus zu ermöglichen.

2. Vorrichtung nach Anspruch 1, dadurch gekennzeichnet, daß der zylindrische Stab (1) mit zwei Abflachungen (2) versehen ist und zwei entsprechende Führungsrollen (6) im Schlitten (3) drehbar gelagert sind.

3. Vorrichtung nach Anspruch 2, dadurch gekennzeichnet, daß die zwei Abflachungen (2) diametral einander gegenüberliegend angeordnet sind.

4. Vorrichtung nach einem der Ansprüche 1 bis 3, dadurch gekennzeichnet, daß die Führungsrollenachse (10) die Längsachse (11) des zylindrischen Stabes (1) unter einem rechten Winkel schneidet.

5. Vorrichtung nach einem der Ansprüche 1 bis 3, dadurch gekennzeichnet, daß die Führungsrollenachse (10) die Längsachse (11) des zylindrischen Stabes (1) unter einem Spitzenwinkel schneidet.

## Revendications

1. Appareil pour la préparation des volailles abattues, tel que l'enlèvement du jabot, approprié pour communiquer un mouvement rotationnel d'ensemble à un dispositif de traitement se déplaçant le long d'une trajectoire rectiligne, avec un guide droit (1) comprenant une trajectoire de guidage au moins partiellement en spirale et avec une pièce coulissante (3) qui est positionnée autour du guide et qui est apte à aller et venir suivant la direction longitudinale de celui-ci grâce à un mécanisme d'entraînement, ladite pièce coulissante étant munie de moyens (6) suiveur de came en prise sur la trajectoire de guidage pour entraîner en rotation la pièce coulissante par rapport au guide dans la zone de la trajectoire de guidage en spirale, ***caractérisé en ce que*** le guide (1) comprend une tige (1) fixe et substantiellement cylindrique, la trajectoire de guidage étant définie par un méplat (2) de la tige, ledit méplat ne possédant pas, au niveau d'une première partie, une forme en spirale, de façon que le long de ladite première partie la pièce coulissante (3) effectue seulement un mouvement de translation, et ledit méplat possédant une forme en spirale au niveau d'une deuxième partie du guide, de façon que le long de ladite deuxième partie la pièce coulissante (3) effectue simultanément un mouvement rotationnel, et dans lequel les moyens (6) suiveur de came sont constitués d'une roue de guidage (6) montée par tourillon dans la pièce coulissante et en prise sur le méplat (2) de la tige cylindrique, des paliers (12, 13) étant prévus pour permettre la rotation de la pièce coulissante par rapport au mécanisme d'entraînement.

2. Appareil selon la Revendication 1, ***caractérisé en ce que*** la tige cylindrique (1) est munie de deux méplats (2), deux roues de guidage (6) correspondantes étant montées par tourillon dans la pièce coulissante (3).

3. Appareil selon la Revendication 2, ***caractérisé en ce que*** les deux méplats (2) sont diamétralement opposés.

4. Appareil selon l'une des Revendications 1 à 3, ***caractérisé en ce que*** l'axe (10) de la roue de guidage croise l'axe longitudinal (11) de la tige cylindrique (1) selon un angle droit.

5. Appareil selon l'une des Revendications 1 à 3, ***caractérisé en ce que*** l'axe (10) de la roue de guidage croise l'axe longitudinal (11) de la tige cylindrique (1) selon un angle aigu.
